# EUROPÄISCHE PATENTSCHRIFT

(11) **EP 1 067 023 B1**
(45) Veröffentlichungstag und Bekanntmachung des Hinweises auf die Patenterteilung: **10.09.2003**
(21) Anmeldenummer: 00113348.7
(22) Anmeldetag: 23.06.2000
(51) Int. Cl.: B60R 13/07, B60J 7/04, B60J 7/00

(54) **Innenhimmel für ein Fahrzeug-Lamellendach**
Internal lining for vehicle slat roof
Habillage de plafond pour toit à lamelles pour véhicule

(30) Priorität: 03.07.1999 DE 19930776
(43) Veröffentlichungstag der Anmeldung: 10.01.2001
(73) Patentinhaber: CTS Fahrzeug-Dachsysteme GmbH, 21079 Hamburg (DE)
(72) Erfinder: Johe, Ralf, 74369 Löchgau (DE)
(74) Vertreter: Müller, Gottfried

(56) Entgegenhaltungen:
- DE-C- 4 129 860
- DE-C- 19 720 000
- DE-C- 19 756 021
- DE-C- 19 803 597

## Beschreibung

Die Erfindung bezieht sich auf einen Innenhimmel für ein Fahrzeug-Lamellendach nach dem Oberbegriff des Anspruches 1.

Aus der Druckschrift DE 197 20 000 C1 ist ein Schiebedach für ein Kraftfahrzeug bekannt, das aus einer Mehrzahl von in Fahrzeuglängsrichtung hintereinander angeordneten und verschiebbaren sowie schräg ausstellbaren Lamellen besteht und auf der dem Fahrzeuginnenraum zugewandten Unterseite der Lamellen einen faltbaren Innenhimmel aufweist, der in Schließstellung des Fahrzeugdaches unter Spannung gesetzt ist, in öffnungsstellung des Fahrzeugdaches - bei schräg ausgestellten Lamellen - dagegen aufgrund der zusammengerückten Position der Schwenkachsen der Lamellen in Falten zusammengelegt ist.

Gemäß einer weiteren aus der DE 197 20 000 C1 bekannten Ausführung ist der Innenhimmel als zusammenrollbares Rollo ausgebildet, das über eine federbelastete Walze mit einer Spannkraft beaufschlagt wird. In Öffnungsstellung des Daches wird der Innenhimmel auf die Walze aufgewickelt, wodurch Faltenbildung verhindert wird und eine permanente Stoffspannung gewährleistet ist.

Die Ausführung des Innenhimmels als aufwickelbares Rollo setzt eine federbelastete Walze voraus, welche zusätzlichen Einbauraum benötigt und außerdem gewartet werden muß, um die Funktionsfähigkeit auch über lange Zeiträume sicherzustellen. Darüberhinaus ist man bei der Verwendung einer Walze in der Wahl der Stoffart des Innenhimmels eingeschränkt, denn das Aufwickeln auf die Walze ist nur mit vergleichsweise dünnwandigen Stoffarten möglich, andererseits wird aber aus optischen, ästhetischen und auch aus Festigkeitsgründen bevorzugt auf dickere und/oder weichere Stoffe zurückgegriffen.

Wird andererseits auf ein den Innenhimmel belastendes Spannelement verzichtet, besteht die Gefahr, daß der Innenhimmel beim Öffnen des Lamellendaches durch die Lücken zwischen benachbarten Lamellen in Kontakt mit der lackierten Außenfläche der Lamellen gerät, was aufgrund der Relativbewegung des Stoffes zu Kratzern im Lack führen kann. Darüberhinaus können bei höheren Geschwindigkeiten störende Flattergeräusche entstehen.

Der Erfindung liegt das Problem zugrunde, den Innenhimmel eines Fahrzeug-Lamellendaches in Öffnungsstellung mit einfachen Mitteln unter Spannung zu setzen.

Dieses Problem wird erfindungsgemäß mit den Merkmalen des Anspruches 1 gelöst. Vorteilhafte Weiterbildungen des Erfindungsgegenstandes sind den Unteransprüchen zu entnehmen.

Gemäß der Neuerung ist das Spannelement auf der Unterseite einer Lamelle zwischen Lamelle und Innenhimmel befestigt, so daß im wesentlichen kein zusätzlicher Einbauraum für das Spannelement benötigt wird. Das Spannelement weist einen Spannbügel auf, der zumindest in öffnungsstellung der Lamellen den Innenhimmel beaufschlagt und für die Innenhimmelspannung sorgt. Der Spannbügel ist als einfaches mechanisches Bauteil ausgebildet, das keine oder nur eine geringfügige Relativbewegung zur zugehörigen Lamelle bei der Überführung von Schließstellung in Öffnungsstellung ausführt, so daß keine komplizierten und fehleranfälligen Kinematiken für die Erzeugung der Stoffspannung erforderlich sind. Das gesamte Spannelement einschließlich dem Spannbügel kann als einteiliges Bauteil ausgeführt sein, welches homogen aufgebaut ist und aus nur einem Material besteht, wodurch sich die Herstellung und Montage vereinfacht.

In einer zweckmäßigen Ausführung untergreift der Spannbügel in Fahrzeuglängsrichtung gesehen eine Stirnseite derjenigen Lamelle, an der der Spannbügel befestigt ist. Dies hat den Vorteil, daß der Spannbügel zusätzlich zu seiner Spannfunktion als Wasserrinne genutzt werden kann, indem vorteilhaft der freie Stirnabschnitt des Spannbügels nach oben aufgebogen wird, so daß in Öffnungsstellung in den Zwischenraum benachbarter Lamellen eindringendes Wasser vom Spannbügel aufgefangen und zur Dachseite abgeleitet werden kann.

Der die Lamelle in Längsrichtung zweckmäßig überragende Abschnitt des Spannbügels bietet außerdem den Vorteil, daß die in Schließstellung erzielte Verkürzung des Abstandes zwischen benachbarten Lamellen über den Spannbügel kompensiert werden kann, so daß die Stoffhimmelbahn zwischen benachbarten Lamellen in Öffnungsstellung zumindest gleich lang ausgebildet werden kann wie in Schließstellung. Dadurch ist sichergestellt, das der Innenhimmel in Öffnungsstellung des Daches mit Spannung beaufschlagt ist, wodurch Stoffflattern sicher vermieden wird und außerdem keine Gefahr besteht, daß der Innenhimmel mit der kratzempfindlichen, lackierten Außenfläche der Lamellen in Berührung kommt. In bevorzugter Ausführung wird die Stoffbahn in Öffnungsstellung geringfügig gedehnt, wodurch eine straffe Stoffspannung erreicht wird. Die Verlängerung der Stoffbahn kann durch eine entsprechend verlängerte Ausführung des Spannbügels in einfacher Weise erreicht werden. Diese Ausführung eignet sich insbesondere für dehnbare, elastische Stoffarten, die sich beim Schließen des Fahrzeugdaches wieder auf die ursprüngliche Länge zusammenziehen, um sicherzustellen, daß auch in Schließstellung eine ausreichende Stoffspannung zur Verfügung steht und der Innenhimmel glatt an der Unterseite der Lamellen anliegt.

Der Spannbügel schließt vorteilhaft in Schließstellung des Lamellendaches mit der Ebene des Innenhimmels einen Winkel ein, der insbesondere nicht größer als 10° ist. Dadurch wird gewährleistet, daß in Öffnungsstellung die Winkelstellung der Lamellen zumindest teilweise durch den winkligen Abschnitt des Spannelements kompensiert wird, so daß dieser Abschnitt des Spannelements näherungsweise horizontal verläuft. Bei Verwendung des Spannbügels als Wasserrinne bietet sich hierdurch der Vorteil, daß der freie Stirnabschnitt des Spannbügels verhältnismäßig weit oben verbleibt, so daß auch größere Wassermengen ohne die Gefahr eines Überlaufens aufgenommen werden können.

Der Spannbügel ist bevorzugt elastisch ausgebildet, so daß bei der Überführung von Schließstellung in Öffnungsstellung, während der der Innenhimmel in Anlage mit dem Spannbügel kommt, eine kontinuierlich ansteigende Spannkraft im Innenhimmel aufgebaut wird. Dadurch können plötzlich auftretende Spannungsspitzen vermieden werden.

Ein Ausführungsbeispiel der Erfindung wird nachstehend an Hand der Zeichnungen näher beschrieben. Es zeigen:
- Fig. 1: einen Schnitt durch einen Verbund von zwei hintereinander angeordneten Lamellen eines Lamellen-Fahrzeugdaches,
- Fig. 2: eine perspektivische Ansicht von zwei Spannelementen in Schließstellung, die hintereinander angeordneten Lamellen zugeordnet sind, mit einem zwischenliegenden Innenhimmel,
- Fig. 3: die Spannelemente in Öffnungsstellung.

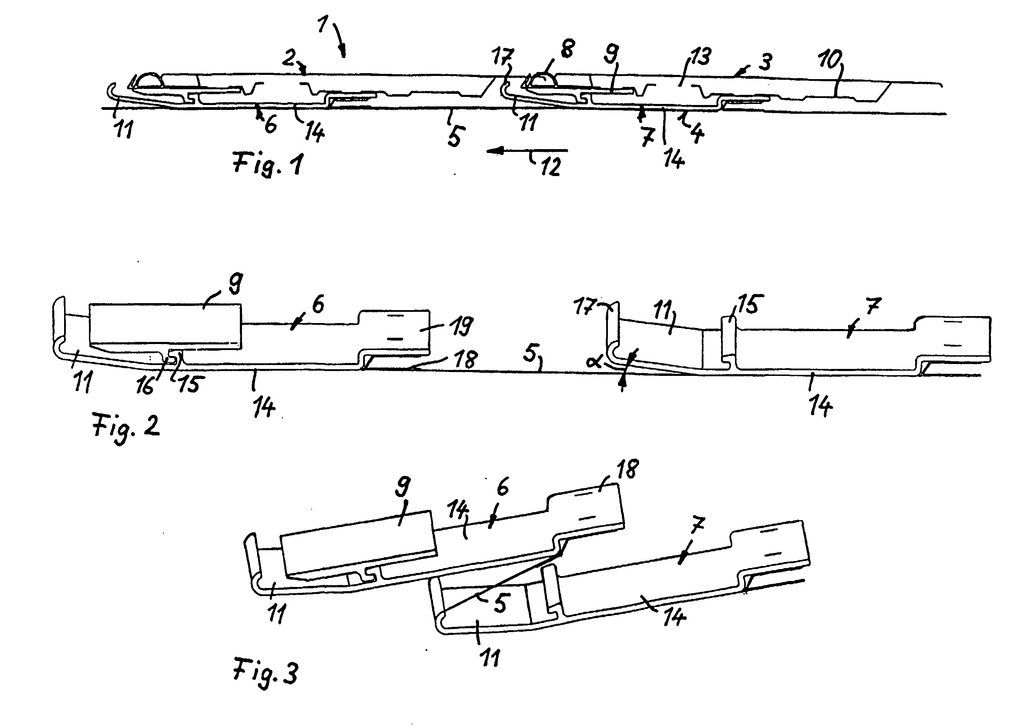

Bei den in den Fig. 1 bis 3 dargestellten Ausführungsbeispielen sind gleiche Bauteile mit gleichen Bezugszeichen versehen.

Der Schnittdarstellung gemäß Fig. 1 sind zwei in Fahrzeuglängsrichtung hintereinander angeordnete Dachlamellen 2 und 3 zu entnehmen, die in einer Dachöffnung eines Fahrzeugdaches zwischen der gezeigten Schließstellung und einer Öffnungsstellung, in der der Fahrzeuginnenraum nach oben geöffnet ist, verstellbar sind. Das Lamellendach weist zumindest zwei Lamellen auf, in der Regel sind mehr als zwei Lamellen vorgesehen. Die Lamellen 2 und 3 können in und/oder entgegen der Fahrzeuglängsrichtung 12 translatorisch verstellt werden. Zusätzlich zur translatorischen Verschiebebewegung kann jede Lamelle 2 bzw. 3 eine rotatorische Aufstellbewegung um eine Querachse orthogonal zur Fahrzeuglängsrichtung 12 ausführen. In ausgestellter Position der Lamellen 2 und 3 ist der in Fahrzeuglängsrichtung 12 gemessene Abstand zwischen benachbarten Lamellen 2 und 3 üblicherweise verkürzt.

Jede Lamelle besteht aus einem Lamellenkörper 13, in den zur Stabilisierung ein Innenblech 10 eingebracht ist. Im Bereich einer in Fahrzeuglängsrichtung weisenden Stirnseite ist eine Lamellendichtung 8 an jeder Lamelle angeordnet, über die in Schließstellung ein wasserdichter Abschluß zwischen zwei benachbarten, aneinandergrenzenden Lamellen herstellbar ist. Die Lamellendichtung 8 ist auf einem Dichtungsträger 9 gehalten, der unverlierbar am Lamellenkörper 13 befestigt ist.

Auf der dem Fahrzeuginnenraum zugewandten Unterseite 4 der Lamellen 2 und 3 ist ein jeweils einer Lamelle zugeordnetes Spannelement 6 bzw. 7 angeordnet, das fest mit der zugehörigen Lamelle verbunden ist. Weiterhin ist auf der Unterseite 4 ein faltbarer Innenhimmel 5 aufgespannt, der sich zumindest zwischen zwei benachbarten Lamellen erstreckt, zweckmäßig aber die Unterseite sämtlicher Lamellen des Fahrzeugdaches vollständig überzieht und insbesondere aus einem Stück gefertigt ist. Auch die Spannelemente 6 und 7 sind zumindest teilweise vom Innenhimmel 5 überdeckt.

Jedes Spannelement 6 bzw. 7 besteht aus einem zentralen Befestigungsabschnitt 14 und einem einstückig mit dem Befestigungsabschnitt 14 ausgebildeten, in Richtung der Fahrzeugvorderseite weisenden Spannbügel 11, siehe auch Fig. 2 und 3. Der zentrale Befestigungsabschnitt 14 liegt unmittelbar flächig auf der Unterseite der Lamelle an und weist einen nach oben gerichteten Vorsprung 15 auf, der mit einer Rastnase versehen ist, welche in Einbaulage in eine komplementär geformte Rastöffnung eines Vorsprunges 16 einrastet, der am Dichtungsträger 9 ausgebildet ist. Hierdurch wird in Vertikalrichtung eine formschlüssige Verbindung zwischen dem Dichtungsträger 9 einer Lamelle und dem jeweiligen Spannelement 6 bzw. 7 geschaffen.

Der Spannbügel 11 bildet einen Endabschnitt des Spannelements 6 bzw. 7. Er weist einen nach oben gebogenen, teilkreisförmigen Stirnabschnitt 17 auf, der zum zentralen Befestigungsabschnitt 14 des Spannelementes hin konvex gewölbt ist.

Der Spannbügel 11 besteht aus einem in sich ebenen Abschnitt, welcher mit dem Befestigungsabschnitt 14 einen Winkel α einschließt, der zweckmäßig maximal 10° beträgt. Der Spannbügel 11 ist nach oben entgegengesetzt zum Fahrzeuginnenraum gebogen. Da der zentrale Befestigungsabschnitt 14 des Spannelements in der Stoffebene des Innenhimmels 5 liegt, schließt in Schließstellung des Daches der Spannbügel 11 auch mit dem Innenhimmel 5 den Winkel α ein.

Der Spannbügel 11 untergreift in vertikaler Richtung die Lamellendichtung 8 und überragt zugleich in Fahrzeuglängsrichtung 12 die Stirnseite der Lamelle. In Verbindung mit dem aufgebogenen Stirnabschnitt 17 wird dadurch eine Wasserrinne erzeugt, die insbesondere in Öffnungsstellung des Daches das von den aufgestellten Lamellen abfließende Wasser auffängt und, sofern sich die Spannelemente über die gesamte Dachbreite bzw. Lamellenlänge erstrecken, zum Seitenbereich des Daches ableiten können. Aufgrund der winkligen Anordnung des Spannbügels 11 liegt dieser bei ausgestellten Lamellen näherungsweise in einer horizontalen Ebene. Es kann gegebenenfalls zweckmäßig sein, den Winkel α auf den Aufstellwinkel der Lamellen anzupassen, so daß in Öffnungsstellung des Fahrzeugdaches der Spannbügel 11 eine horizontale Lage einnimmt, vgl. auch Fig. 3. In diesem Fall kann es zweckmäßig sein, den Winkel α größer als 10° auszubilden.

Wie Fig. 2 zu entnehmen, überspannt der Innenhimmel 5 die Distanz zwischen den Spannelementen 6 und 7 benachbarter Lamellen und ist insbesondere über ein Befestigungselement 18, welches im Bereich eines Endabsatzes 19 des Spannelementes angeordnet ist, fest mit jedem Spannelement verbunden. Der Endabsatz 19 ist auf der der Fahrzeugvorderseite abgewandten Seite des zentralen Befestigungsabschnittes 14 des Spannelementes angeordnet.

Wie Fig. 3 zu entnehmen, liegt der Stoff des Innenhimmels 5 in ausgestellter Position der Lamellen mit entsprechend ausgestellten Spannelementen 6 und 7 flächig auf der dem Fahrzeuginnenraum zugewandten Unterseite jedes Spannbügels 11 an. In Öffnungsstellung ist der Innenhimmel gespannt, so daß auch der freie, zwischen zwei Spannelementen 6 und 7 sich erstreckende Abschnitt des Innenhimmels eine in sich ebene, faltenfreie und unter Spannung stehende Fläche bildet. Da in Öffnungsstellung der hintere Endabschnitt 18 eines Spannelements in Fahrzeugrichtung den vorderen Spannbügel 11 des folgenden Spannelements überragt, verläuft der Innenhimmel 5 zickzack-förmig, wobei der zwischen zwei Spannelementen 6 und 7 liegende Abschnitt des Innenhimmels 5 entgegengesetzt gerichtet ist zu den Abschnitten des Innenhimmels, welche fest mit der Unterseite der Spannelemente verbunden sind. Der in Öffnungsstellung der Lamellen sich überlappende Abschnitt benachbarter Spannelemente wird bevorzugt so gewählt, daß der Innenhimmel 5 in Öffnungsstellung unter Spannung steht, wobei die Spannung über die Länge insbesondere des Spannbügels 11 in der Weise festgelegt werden kann, daß der Innenhimmel 5 bei der Überführung von Schließstellung in Öffnungsstellung eine Dehnung erfährt, die beispielsweise im Bereich von einem Millimeter liegen kann. Die Dehnung des Innenhimmels geht aufgrund der Elastizität des Stoffes des Innenhimmmels bei der Überführung von Öffnungsstellung in Schließstellung wieder zurück.

Der Spannbügel 11 ist in einer ersten zweckmäßigen Ausführung starr ausgeführt und fest mit dem zentralen Befestigungsabschnitt 14 des Spannelements verbunden. Die Spannung des Innenhimmels 5 wird in dieser Ausführung ausschließlich durch die Relativbewegung zwischen zwei benachbarten Lamellen erzeugt.

Es kann aber auch zweckmäßig sein, den Spannbügel elastisch verformbar auszubilden, um eine kontinuierlich zunehmende Spannung im Innenhimmel 5 bei der Überführung in Öffnungsstellung zu erreichen. Die Spannelemente 6 sind vorteilhaft aus Metall gefertigt.

Es kann vorteilhaft sein, an der der Fahrzeugvorderseite nächstgelegenen, ersten Lamelle kein Spannelement vorzusehen und nur die auf die erste Lamelle folgenden Lamellen mit Spannelementen auszustatten.

## Patentansprüche

1. Auf der dem Fahrzeuginnenraum zugewandten Unterseite (4) eines Fahrzeug-Lamellendaches mit zumindest zwei benachbarten Lamellen (2 und 3), die in einer Dachöffnung zwischen einer Schließstellung und einer Öffnungsstellung beweglich sind, angeordneter faltbarer Innenhimmel (5), der von einem Spannelement (6 bzw. 7) kraftbeaufschlagt ist,
**dadurch gekennzeichnet,**
- **daß** das Spannelement (6 bzw. 7) auf der Unterseite (4) einer Lamelle (2 bzw. 3) auf der dem Fahrzeuginnenraum abgewandten Seite des Innenhimmels (5) befestigt ist,
- **daß** das Spannelement (6 bzw. 7) einen Spannbügel (11) aufweist, der in Öffnungsstellung der Lamelle (2 bzw. 3) den Innenhimmel (5) beaufschlagt.

2. Innenhimmel nach Anspruch 1,
**dadurch gekennzeichnet,**
**daß** er zwischen zwei benachbarten Lamellen (2 und 3) bei der Überführung von Schließstellung in Öffnungsstellung eine durch das Spannelement (6 bzw. 7) verursachte Dehnung erfährt.

3. Innenhimmel nach Anspruch 1 oder 2,
**dadurch gekennzeichnet,**
**daß** er in allen Stellungen der Lamellen (2 und 3) permanent gespannt ist.

4. Innenhimmel nach einem der Ansprüche 1 bis 3,
**dadurch gekennzeichnet,**
**daß** das Spannelement (6 bzw. 7) sich über die Breite der Dachöffnung bzw. die Länge der Lamelle (2 bzw. 3) erstreckt.

5. Innenhimmel nach einem der Ansprüche 1 bis 4,
**dadurch gekennzeichnet,**
**daß** der Spannbügel (11) als Wasserrinne mit einem in Richtung der Lamelle nach oben aufgebogenen freien Stirnabschnitt (17) ausgebildet ist.

6. Innenhimmel nach einem der Ansprüche 1 bis 5,
**dadurch gekennzeichnet,**
**daß** der Spannbügel (11) in Fahrzeuglängsrichtung (12) gesehen eine Stirnseite der Lamelle (2 bzw. 3) untergreift.

7. Innenhimmel nach einem der Ansprüche 1 bis 6,
**dadurch gekennzeichnet,**
**daß** der Spannbügel (11) einen ebenen Abschnitt aufweist, der in Schließstellung des Lamellendaches mit der Ebene des Innenhimmels (5) einen Winkel (α) einschließt.

8. Innenhimmel nach Anspruch 7,
**dadurch gekennzeichnet,**
**daß** der Winkel (α) maximal 10° beträgt.

9. Innenhimmel nach einem der Ansprüche 1 bis 8,
**dadurch gekennzeichnet,**
**daß** der Spannbügel (11) elastisch ausgebildet ist.

10. Innenhimmel nach einem der Ansprüche 1 bis 9,
**dadurch gekennzeichnet,**
**daß** jeder Lamelle (2 bzw. 3) jeweils ein Spannelement (6 bzw. 7) zugeordnet ist.

## Claims

1. A foldable inside roof lining (5) which is arranged on the underside (4), facing the vehicle interior, of a vehicle segmental roof having at least two adjacent segments (2 and 3), which are moveable in a roof opening between a closed position and an open position, and which is acted upon with force by a tensioning element (6 or 7), wherein
- the tensioning element (6 or 7) is fastened on the underside (4) of a segment (2 or 3), on that side of the inside roof lining (5) which faces away from the vehicle interior,
- the tensioning element (6 or 7) has a tensioning clip (11) which, in the open position of the segment (2 or 3), acts upon the inside roof lining (5).

2. The inside roof lining as claimed in claim 1, wherein it undergoes stretching, caused by the tensioning element (6 or 7), between two adjacent segments (2 and 3) during the transfer from the closed position into the open position.

3. The inside roof lining as claimed in claim 1 or 2, wherein it is permanently tensioned in all positions of the segments (2 and 3).

4. The inside roof lining as claimed in one of claims 1 to 3, wherein the tensioning element (6 or 7) extends over the width of the roof opening and the length of the segment (2 or 3).

5. The inside roof lining as claimed in one of claims 1 to 4, wherein the tensioning clip (11) is designed as a gutter having a free end section (17) bent upward in the direction of the segment.

6. The inside roof lining as claimed in one of claims 1 to 5, wherein the tensioning clip (11) grips under an end side of the segment (2 or 3), as seen in the longitudinal direction (12) of the vehicle.

7. The inside roof lining as claimed in one of claims 1 to 6, wherein the tensioning clip (11) has a flat section which encloses an angle (α) with the plane of the inside roof lining (5) in the closed position of the segmental roof.

8. The inside roof lining as claimed in claim 7, wherein the angle (α) amounts to a maximum of 10°.

9. The inside roof lining as claimed in one of claims 1 to 8, wherein the tensioning clip (11) is of elastic design.

10. The inside roof lining as claimed in one of claims 1 to 9, wherein each segment (2 or 3) is assigned a respective tensioning element (6 or 7).

## Revendications

1. Habillage de plafond (5) pliable, disposé sur le côté inférieur (4) d'un toit à lamelles pour véhicule tourné vers l'habitacle du véhicule, comprenant au moins deux lamelles voisines (2 et 3) qui peuvent se déplacer dans une ouverture du toit entre une position de fermeture et une position d'ouverture, lequel est sollicité par une force d'un élément de serrage (6, respectivement 7),
**caractérisé en ce que**
- l'élément de serrage (6, respectivement 7) est fixé sur le côté inférieur (4) d'une lamelle (2, respectivement 3) sur le côté de l'habillage de plafond (5) opposé à l'habitacle du véhicule,
- l'élément de serrage (6, respectivement 7) présente un arceau de serrage (11) qui sollicite l'habillage de plafond (5) dans la position d'ouverture de la lamelle (2, respectivement 3).

2. Habillage de plafond selon la revendication 1,
**caractérisé en ce**
**qu'**il subit entre deux lamelles voisines (2 et 3) lors du passage de la position de fermeture dans la position d'ouverture une extension provoquée par l'élément de serrage (6, respectivement 7).

3. Habillage de plafond selon la revendication 1 ou 2,
**caractérisé en ce**
**qu'**il est serré de manière permanente dans toutes les positions des lamelles (2 et 3).

4. Habillage de plafond selon l'une quelconque des revendications 1 à 3,
**caractérisé en ce que**
l'élément de serrage (6, respectivement 7) s'étend sur toute la largeur de l'ouverture du toit ou sur la longueur de la lamelle (2, respectivement 3).

5. Habillage de plafond selon l'une quelconque des revendications 1 à 4,
**caractérisé en ce que**
l'arceau de serrage (11) est réalisé sous la forme d'une gouttière avec une portion frontale (17) libre recourbée ves le haut dans la direction de la lamelle.

6. Habillage de plafond selon l'une quelconque des revendications 1 à 5,
**caractérisé en ce que**
l'arceau de serrage (11) vient en prise par le dessous, vu dans la direction longitudinale du véhicule (12), avec un côté frontal de la lamelle (2, respectivement 3).

7. Habillage de plafond selon l'une quelconque des revendications 1 à 6,
**caractérisé en ce que**
l'arceau de toit (11) présente une portion plane qui forme un angle (α) dans la position de fermeture du toit à lamelles avec le plan de l'habillage de plafond (5).

8. Habillage de plafond selon la revendication 7,
**caractérisé en ce que**
l'angle (α) vaut au maximum 10°.

9. Habillage de plafond selon l'une quelconque des revendications 1 à 8,
**caractérisé en ce que**
l'arceau de toit (11) est élastique.

10. Habillage de plafond selon l'une quelconque des revendications 1 à 9,
**caractérisé en ce**
**qu'**un élément de serrage (6, respectivement 7) est associé à chaque lamelle (2, respectivement 3).
